# EUROPEAN PATENT APPLICATION

(11) **EP 3 157 286 A1**
(43) Date of publication of application: **19.04.2017**
(21) Application number: 14894811.0
(22) Date of filing: 16.09.2014
(51) Int. Cl.: H04W 28/10

(54) **SERVICE PROVIDING METHOD, DEVICE AND SYSTEM**

(30) Priority: 11.06.2014 CN 201410258078
(71) Applicant: ZTE Corporation, Shenzhen, Guangdong 518057 (CN)
(72) Inventor: LIU, Xinqiang, Shenzhen Guangdong 518057 (CN); LIN, Mingdong, Shenzhen Guangdong 518057 (CN); WANG, Lirong, Shenzhen Guangdong 518057 (CN)
(74) Representative: Savi, Massimiliano
(86) International application number: PCT/CN2014/086659
(87) International publication number: WO 2015/188487

(57) **Abstract**

The present invention discloses a service providing method, apparatus and system. Herein, the method includes: identifying a request currently initiated by a terminal as a request for using a directional application; allocating a traffic quota for current use of the terminal according to a directional traffic card bound with a user identification of the terminal, herein, the directional traffic card is used to pay for traffic generated when the terminal uses the directional application; and transmitting the allocated traffic quota to a network side device corresponding to the directional application, and instructing the network side device to provide a service corresponding to the directional application for the terminal according to the traffic quota.

## Description

### Technical Field

The present invention relates to the field of communication, and in particular to a service providing method, apparatus and system.

### Background

At present, with the rapid development of 3G and 4G technologies, the terminal users of the mobile Internet are more and more, and the users use the mobile terminal to connect to the Internet via the mobile network for web browsing, video watching or online games, etc.

In the related technology, various operators generally provide traffic package services, such as, monthly traffic package, package usage amount, etc. These traffic packet services do not distinguish the specific service application currently used by the user, such as, web browsing, video watching, online games, etc., and all Internet services are processed according to a same manner, for example, charging according to the traffic actually generated by all applications used by the user, or charging according to the online time of all applications used by the user. In addition, it is lack of a technology for serving the Quality of Service (referred to as QoS for short), such as, bandwidth guarantee of a specific service, etc., in the related technology, for example, providing bandwidth guarantee for a specific application of a service provider SP.

In view of the problem that the traffic is not allocated according to the used specific service application in the related technology, no effective solution is put forward currently.

### Summary of the Invention

In view of the problem that the traffic is not allocated according to the used specific service applications in the related technology, the present invention provides a service providing method, apparatus and system, to at least solve the above problem.

A service providing method is provided according to one embodiment of the present invention, including: identifying a request currently initiated by a terminal as a request for using a directional application; allocating a traffic quota for current use of the terminal according to a directional traffic card bound with a user identification of the terminal, herein, the directional traffic card is used to pay for traffic generated when the terminal uses the directional application; and transmitting the allocated traffic quota to a network side device corresponding to the directional application, and instructing the network side device to provide a service corresponding to the directional application for the terminal according to the traffic quota.

Alternatively, when instructing the network side device to provide a service corresponding to the directional application for the terminal according to the traffic quota, the method further includes: instructing the network side device to guarantee a specified network bandwidth when the network side device provides the service for the terminal.

Alternatively, after instructing the network side device, the method further includes: the network side device providing the service for the terminal according to an instruction, and separately measuring traffic generated by the terminal using the directional application this time.

Alternatively, before identifying a request currently initiated by a terminal as a request for using a directional application, the method further includes: receiving an operation request, transmitted by the terminal, for requesting to bind the directional traffic card; accepting the operation request, and binding the user identification of the terminal with the directional traffic card; and synchronizing a binding relationship between the user identification and the directional traffic card to the network side device.

Alternatively, before identifying a request currently initiated by a terminal as a request for using a directional application, the method further includes: receiving a request for card-making the directional traffic card, responding to the request, and recording information of the directional traffic card; and receiving an operation request for confirming the directional traffic card, and synchronizing the information of the directional traffic card to the network side device.

Alternatively, the information of the directional traffic card includes: a capacity of the directional traffic card, and identification information of the directional application.

Alternatively, the information of the directional traffic card further includes: specified bandwidth information.

Alternatively, the method further includes: receiving a request, transmitted by the network side device, for applying for the traffic quota, herein, the request carries traffic already generated by the current terminal using the directional application; deducting the generated traffic from remaining balance of the directional traffic card, and judging whether a remaining balance after a deduction is less than or equal to zero; and if not, then reallocating the traffic quota according to the remaining balance; and transmitting the reallocated traffic quota to the network side device.

A service providing apparatus is provided according to one embodiment of the present invention, including: an identification module, arranged to identify a request currently initiated by a terminal as a request for using a directional application; an allocation module, arranged to allocate a traffic quota for current use of the terminal according to a directional traffic card bound with a user identification of the terminal; and a transmission module, arranged to transmit the allocated traffic quota to a network side device corresponding to the directional application, and instruct the network side device to provide a service corresponding to the directional application for the terminal according to the traffic quota.

Alternatively, the transmission module is further arranged to instruct the network side device to guarantee a specified network bandwidth when the network side device provides the service for the terminal.

Alternatively, the apparatus further includes: a binding module, arranged to receive an operation request, transmitted by the terminal, for requesting to bind the directional traffic card, and bind a user identification of the terminal with the directional traffic card; herein, the directional traffic card is used to pay for traffic generated when the directional application is used; and a synchronization module, arranged to synchronize a binding relationship between the user identification and the directional traffic card to the network side device.

Alternatively, the apparatus further includes: a recording module, arranged to, when receiving a request for card-making the directional traffic card, respond to the request, and record information of the directional traffic card; and the synchronization module is further arranged to receive an operation request for confirming the directional traffic card, and synchronize the information of the directional traffic card to the network side device.

Alternatively, the apparatus further includes: a receiving module, arranged to receive a request, transmitted by the network side device, for applying for the traffic quota, herein, the request carries traffic already generated by the current terminal using the directional application; an execution module, arranged to deduct the generated traffic from remaining balance; a judgment module, arranged to judge whether a remaining balance after a deduction is less than or equal to zero; the allocation module is further arranged to reallocate the traffic quota according to the remaining balance; and the transmission module is further arranged to transmit the reallocated traffic quota to the network side device.

A service providing system is provided according to another embodiment of the present invention, including: a network side device and the above service providing apparatus, herein, the network side device is arranged to, according to an instruction of the apparatus, provide the service corresponding to the directional application for the terminal as per the traffic quota allocated by the apparatus for the terminal to use the directional application this time.

Alternatively, the network side device is further arranged to guarantee a specified network bandwidth when providing the service for the terminal.

Alternatively, the network side device is further arranged to separately measure traffic generated by the terminal using the directional application this time.

According to the present invention, when the terminal initiates the request for using the directional application, the traffic quota is allocated for the terminal to use the directional application this time according to the directional traffic card bound with the terminal, and the traffic quota is transmitted to the network side device, to instruct the network side device to provide the service corresponding to the directional application for the terminal according to the traffic quota. Therefore, the present invention solves the problem that the traffic is not allocated according to the used specific service applications in the related technology, and further, when the terminal user uses a certain SP or a specific application, the generated traffic is automatically identified as the traffic belonging to the directional traffic card bound with the user, to be charged independently. The user experience is improved, and the service abilities of the service providers and the network operators are also improved.

### Brief Description of Drawings

The accompanying drawings described herein are used to provide further understanding for the present invention and constitute a part of the present application. The illustrated embodiments of the present invention and the description thereof are used to explain the present invention, rather than constituting an inappropriate limitation to the present invention. Among the drawings:
FIG. 1 is a flow chart of a service providing method according to an embodiment of the present invention;
FIG. 2 is a structure diagram of a service providing apparatus according to an embodiment of the present invention;
FIG. 3 is a structure diagram of a service providing system according to an embodiment of the present invention;
FIG. 4 is a system structure diagram of a directional traffic card according to an embodiment of the present invention;
FIG. 5 is a flow chart of card-making of a directional traffic card according to an alternative embodiment of the present invention;
FIG. 6 is a flow chart of selling a directional traffic card according to an alternative embodiment of the present invention;
FIG. 7 is a flow chart of using a directional traffic card according to an alternative embodiment of the present invention;
FIG. 8 is a diagram of guaranteeing bandwidth of a directional traffic card according to an alternative embodiment of the present invention.

### Specific Embodiments

The present invention is described in detail with reference to the accompanying drawings and in combination with embodiments hereinafter. It should be illustrated that, in the case of no conflict, the embodiments in the present application and features in these embodiments can be combined with each other.

A service providing method is provided according to an embodiment of the present invention.

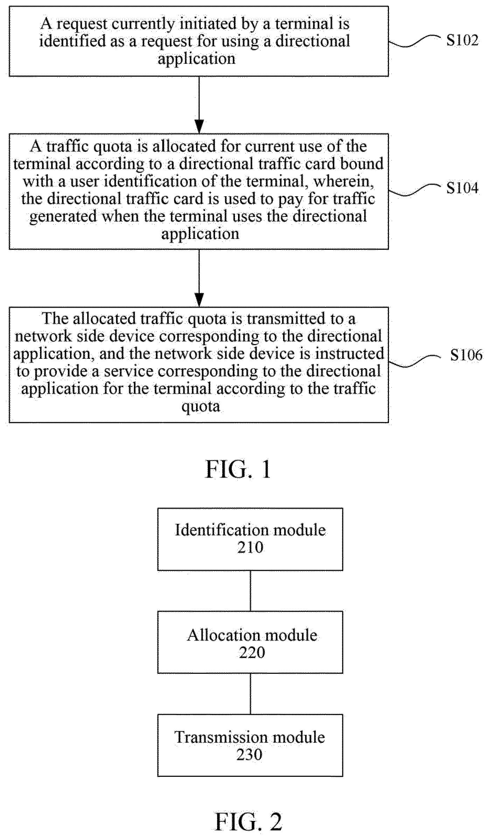

FIG. 1 is a flow chart of a service providing method according to an embodiment of the present invention. As shown in FIG. 1, the method mainly includes step S102 and step S106 below.

In step S102, a request currently initiated by a terminal is identified as a request for using a directional application.

In the specific implementation process, when the user initiates the application request through the terminal, the request of the user is received. The request initiated currently by the user is identified whether to be the request for using the directional application according to the identification information of the application requested to use by the user.

In step S104, a traffic quota is allocated for current use of the terminal according to a directional traffic card bound with a user identification of the terminal, herein, the directional traffic card is used to pay for traffic generated when the terminal uses the directional application.

In step S106, the allocated traffic quota is transmitted to a network side device corresponding to the directional application, and the network side device is instructed to provide a service corresponding to the directional application for the terminal according to the traffic quota.

Alternatively, in order to ensure the quality of using the directional application by the user, in an alternative implementation mode, when the network side device is instructed to provide a service corresponding to the directional application for the terminal according to the traffic quota, the method further includes: the network side device is instructed to guarantee a specified network bandwidth when the network side device provides the service for the terminal.

Alternatively, after instructing the network side device, the method may further include: the network side device provides the service for the terminal according to an instruction, and traffic generated by the terminal using the directional application this time is separately measured.

Alternatively, in the embodiment of the present invention, the terminal may initiate a request for binding the directional traffic card before the step S102. In the alternative implementation mode, the method may include: it is to receive an operation request, transmitted by the terminal, for requesting to bind the directional traffic card; and accept the operation request, and bind the user identification of the terminal with the directional traffic card; and synchronize a binding relationship between the user identification and the directional traffic card to the network side device.

Alternatively, in the embodiment of the present invention, before receiving an operation request, transmitted by the terminal, for requesting to bind the directional traffic card, the method may further include: it is to receive a request for card-making the directional traffic card, respond to the request, and record information of the directional traffic card; and receive an operation request for confirming the directional traffic card, and synchronize the information of the directional traffic card to the network side device.

Alternatively, the information of the directional traffic card includes: a capacity of the directional traffic card, and identification information of the directional application.

Alternatively, the information of the directional traffic card may further include: specified bandwidth information.

Alternatively, after the step S106, the method may further include: a request, transmitted by the network side device, for applying for the traffic quota is received, herein, the request carries traffic already generated by the current terminal using the directional application; the generated traffic is deducted from remaining balance of the directional traffic card, and whether a remaining balance after a deduction is less than or equal to zero is judged; and if not, then the traffic quota is reallocated according to the remaining balance; and the reallocated traffic quota is transmitted to the network side device.

According to the above method provided by the embodiment of the present invention, when the terminal initiates the use request of the directional application, the traffic quota is allocated for the terminal to use the directional application this time according to the directional traffic card bound with the terminal, and the traffic quota is transmitted to the network side device, to instruct the network side device to provide the service corresponding to the directional application for the terminal according to the traffic quota. Therefore, the method solves the problem that the traffic is not allocated according to the used specific service applications in the related technology, and further, when the terminal user uses a certain SP or a specific application, the generated traffic is automatically identified as the traffic belonging to the directional traffic card bound with the user, to be charged independently. The user experience is improved, and the service abilities of the service providers and the network operators are also improved.

Corresponding to the above method, a service providing apparatus is further provided according to an embodiment of the present invention.

FIG. 2 is a structure diagram of a service providing apparatus according to an embodiment of the present invention. As shown in FIG. 2, the apparatus mainly includes: an identification module 210, arranged to identify a request currently initiated by a terminal as a request for using a directional application; an allocation module 220, arranged to allocate a traffic quota for current use of the terminal according to a directional traffic card bound with a user identification of the terminal; and a transmission module 230, arranged to transmit the allocated traffic quota to a network side device corresponding to the directional application, and instruct the network side device to provide a service corresponding to the directional application for the terminal according to the traffic quota.

Alternatively, the transmission module 230 may further be arranged to instruct the network side device to guarantee a specified network bandwidth when the network side device provides the service for the terminal.

Alternatively, the apparatus may further include: a binding module, arranged to receive an operation request, transmitted by the terminal, for requesting to bind the directional traffic card, and bind a user identification of the terminal with the directional traffic card; herein, the directional traffic card is used to pay for traffic generated when the directional application is used; and a synchronization module, arranged to synchronize a binding relationship between the user identification and the directional traffic card to the network side device.

Alternatively, the apparatus may further include: a recording module, arranged to, when receiving a request for card-making the directional traffic card, respond to the request, and record information of the directional traffic card. The synchronization module is further arranged to receive an operation request for confirming the directional traffic card, and synchronize the information of the directional traffic card to the network side device.

Alternatively, the apparatus may further include: a receiving module, arranged to receive a request, transmitted by the network side device, for applying for the traffic quota, herein, the request carries traffic already generated by the current terminal using the directional application; an execution module, arranged to deduct the generated traffic from remaining balance; a judgment module, arranged to judge whether a remaining balance after a deduction is less than or equal to zero; the allocation module 220, further arranged to reallocate the traffic quota according to the remaining balance; and the transmission module 230, further arranged to transmit the reallocated traffic quota to the network side device.

A service providing system is further provided according to an embodiment of the present invention.

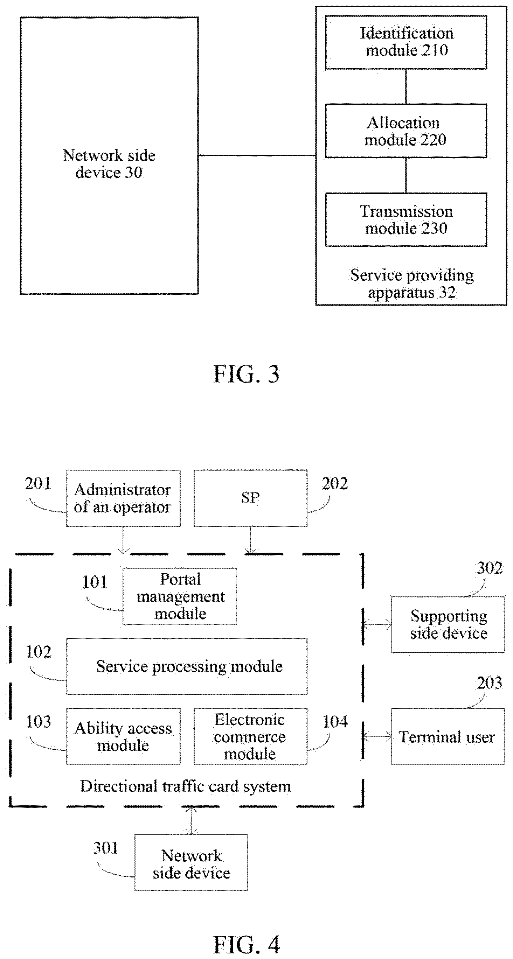

FIG. 3 is a structure diagram of a service providing system according to an embodiment of the present invention. As shown in FIG. 3, the system includes: a network side device 30 and the above service providing apparatus 32. Herein, the network side device 30 is arranged to, according to an instruction of the apparatus 32, provide the service corresponding to a directional application for a terminal as per the traffic quota allocated by the apparatus 32 for the terminal to use the directional application this time.

Alternatively, the network side device 30 is further arranged to guarantee a specified network bandwidth when providing the service for the terminal.

Alternatively, the network side device 30 is further arranged to separately measure traffic generated by the terminal using the directional application this time.

Through the above system, when the user requests the directional application, the directional traffic card bound with the user may be used to pay for the traffic generated by the user using the directional application, which improves the user experience and also improves the service abilities of the service providers and the network operators.

In an alternative implementation mode of the embodiment of the present invention, the above service providing apparatus may be implemented by adopting the directional traffic card system as shown in FIG. 4. As shown in FIG. 4, the directional traffic card system may include: a portal management module 101, used for an SP operator and an administrator of an operator to performing a application and approval operation of card-making the directional traffic card; a service processing module 102, used for processing procedures, such as ordering of the directional traffic card, binging of the card number, using of the directional traffic card, of the terminal user; an ability access module 103, arranged to implement the interfaces with the network side device and the supporting side device; herein, the function of the module may be actually incorporated into the service processing module to be implemented; an electronic commerce module 104, arranged to initiate the functions, such as, purchasing the directional traffic card, binding the card number, inquiring the traffic, etc., for the terminal user, of which the form may be APP application, WAP portal, WWW portal, etc.

Through the directional traffic card system, the card-making of the directional traffic card, sales of the directional traffic card and the sing of the directional traffic card may be completed.

Herein, the card-making of the directional traffic card may include the following steps. In step 1, the SP operator or the operator of an operator logs in the portal management module to perform the card-making of the directional traffic card, including setting a capacity of the traffic card, bandwidth information required to be specified, identification information of the directional application, etc. In step 2, the administrator of the operator logs in the portal management module, to perform the approval of the card-making of the directional traffic card. In step 3, after the completion of the card-making approval, the information of the directional traffic card is synchronized to the electronic commerce module and the network side device.

The sales of the directional traffic card may include the following steps. In step 1, the terminal user logs in the electronic commerce module, to initiate the purchasing operation of the directional traffic card and the binding operation of the card number. In step 2, the directional traffic card system processes the purchasing request of the terminal user, and the supporting side device completes a fee deduction process; and the fee deduction may be forward deducting the fee of the terminal user or backward deducting the SP fee (that is, the SP performs the service promotion). In step 3, after the ordering relationship of the terminal user is processed successfully, the ordering relationship information is synchronized to the network side device for execution.

The using of the directional traffic card may include the following steps. In step 1, the terminal user initiates the using of the directional application. In step 2, the directional traffic card system identifies the directional application, to allocate the traffic quota for the using of the user. In step 3, the directional traffic card system instructs the network side device to provide the user with a service and ensure the specified network bandwidth.

As shown in FIG. 4, in the embodiment of the present invention, an external unit interacted with the directional traffic card system may include: administrator of an operator 201, SP operator 202, terminal user 203, network side device 301, and supporting side device 302.

The procedures of card-making, sales and using of the directional traffic card are described in details respectively in combination with FIG. 4 hereinafter.

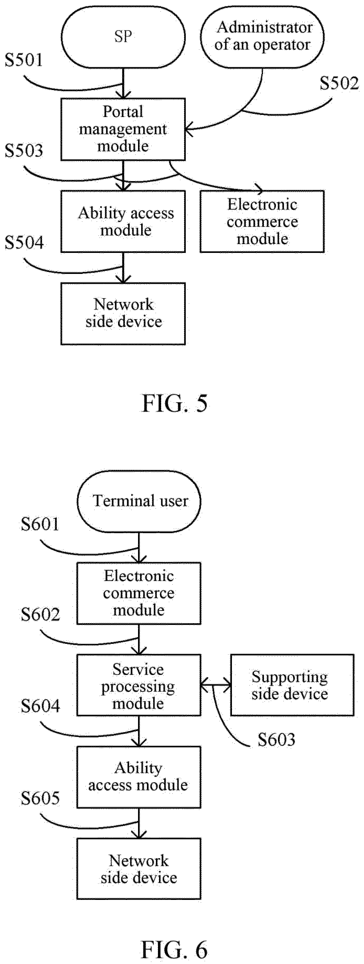

FIG. 5 is a flow chart of card-making of the directional traffic card in an embodiment of the present invention. As shown in FIG. 5, in the embodiment of the present invention, the card-making of the directional traffic card may include the following steps.

In step S501, the SP operator, who also may be the operator of an operator, logs in the portal management module, fills in the directional traffic card information, and initiates the card-making application; herein, the directional traffic card information includes at least the capacity of the traffic card, the QoS information, such as, the bandwidth required to be specified, etc., the identification information of the directional application.

In step S502, the administrator of the operator completes the approval of the card-making application of the directional traffic card.

In step S503, the directional traffic card information of which the approval is passed is synchronized to the electronic commerce module and the ability access module by the portal management module.

In step S504, the ability access module further synchronizes the directional traffic card information to the network side device. In the present step, the ability access module is an optional module, and when there is no ability access module, the directional traffic card information may be directly synchronized to the network side device by the portal management module.

FIG. 6 is a flow chart of selling the directional traffic card in an embodiment of the present invention. As shown in FIG. 6, in the embodiment of the present invention, the selling of the directional traffic card may include the following steps.

In step S601, the terminal user logs in the electronic commerce module to purchase the directional traffic card and bind the card number. The binding of the card number refers to binding the directional traffic card with the terminal number specified by the terminal user.

In step S602, the electronic commerce module transmits an ordering request of the terminal user to the service processing module, to perform the operations, such as, the information check and the ordering relationship processing, etc.

In step S603, the service processing module notifies the supporting side device to complete a fee deduction operation. The fee deduction operation may be forward deducting the fee of the terminal user or backward deducting the SP fee according to different types of the directional traffic cards. In the present step, the service processing module is an optional module, and when there is no service processing module, the ordering relationship processing may be directly completed by the electronic commerce module, and the supporting side device completes the fee deduction operation.

In step S604, after the service processing module completes the ordering relationship processing, the ordering relationship information is synchronized to the ability access module, and finally synchronized to the network side device for execution. In the present step, the service processing module and the ability access module are optional modules; and when there is no those modules, the ordering relationship processing may be directly completed by the electronic commerce module, and synchronized to the network side device.

In step S605, the ability access module further synchronizes the ordering relationship information to the network side device. In the present step, the ability access module is an optional module; and when there is no that module, the ordering relationship information may be synchronized to the network side device by the electronic commerce module or the service processing module.

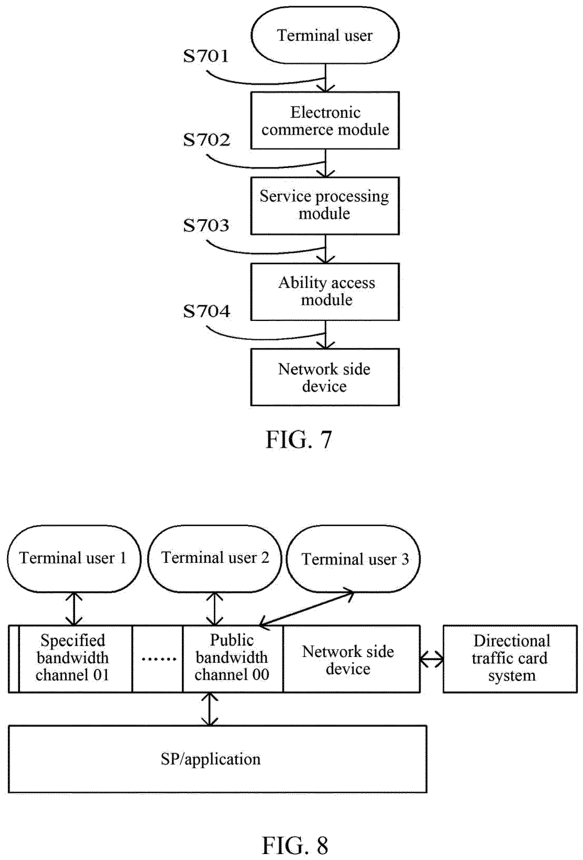

FIG. 7 is a flow chart of using the directional traffic card in an embodiment of the present invention. As shown in FIG. 7, in the embodiment of the present invention, the using of the directional traffic card may include the following steps.

In step S701, the terminal user uses the directional application (such as, watching a video on a certain SP site), and uses a request message to trigger the electronic commerce module.

In step S702, the electronic commerce module transmits the using request message of the terminal user to the service processing module.

In step S703, the service processing module checks the using request of the terminal user, and allocates a traffic quota for the current use of the terminal user according to the directional traffic card information.

For example, when network side device provides the traffic service for the user, the traffic is generally measured with 10M and 100M as unit. Taking 10M as an example, the network side device reports to the directional traffic card system when measuring that the user runs out every 10M. In that case, when the user selects to watch a movie of which the size is 2GB, the service processing module allocates 10M traffic quota according to the directional traffic card bound with the terminal user.

In step S704, the service processing module notifies the allocated traffic quota to the network side device for execution via the ability access module, and later the network side device separately measures the part of traffic generated during the using of the terminal user when the network side device performs an execution. In the present step, the ability access module is an optional module, and when there is no that module, the service processing module may directly notify the allocated traffic quota to the network side device.

When the network side device provides the business service for the terminal, the traffic generated by the terminal using the directional service is measured separately. After the traffic quota allocated by the service processing module is run out, the network side device applies to the directional traffic card system for the traffic quota, which carries the traffic used by the current directional application. The directional traffic card system modifies the remaining balance of the directional traffic card of the user after receiving the request. The directional traffic card system deducts the used traffic and judges whether the remaining balance is 0; and if not, the traffic quota is continued to be allocated, and transmitted to the network side device.

In the embodiment of the present invention, the service processing module also may further perform a statistic on the information, such as, traffic, using time, etc., in the directional traffic card used by the user, process the query request initiated by the user, and return corresponding query result information to the user.

FIG. 8 is a diagram of guaranteeing the bandwidth of the directional traffic card in an embodiment of the present invention. As shown in FIG. 8, the terminal user 1 is bound with the directional traffic card, and the terminal user 2 and the terminal user 3 are normal users which are not bound with the directional traffic card. When the terminal user 1 uses the directional application, the network side device identifies the directional application and the user identification, and provides the specified bandwidth service for the terminal user 1 according to the directional traffic card information. When the terminal user 2 and the terminal user 3 use that application, the network side device identifies that the users are not bound with the directional traffic card, and only provides a public bandwidth service.

Alternatively, the directional traffic bandwidth guaranteeing service may refer to guaranteeing the specified bandwidth service for the terminal user or being not less than the specified bandwidth service. For example, in the case that the network is busy, the specified bandwidth service may be guaranteed; and in the case that the network is free, the service higher than the specific bandwidth may be provided.

From the above descriptions, it can be seen that the present invention realizes the technical effects as follows. In the embodiment of the present invention, the directional traffic card is bound for the terminal; when the terminal user uses the traffic generated by a certain SP or a certain specific application, the traffic is automatically identified as the traffic belonging to the directional traffic card to be charged independently, and the specified bandwidth guaranteeing service is provided for the terminal user in the using process. Therefore, the user experience is improved, and the service abilities of the service providers and the network operators are also improved.

It is apparent to those skilled in the art to understand that each module or each step above-mentioned in the present invention can be implemented by the universal calculating apparatus, and they can be integrated in a single calculating apparatus, or distributed in the network formed by a plurality of calculating apparatus. Alternatively, they can be implemented by the executable program codes of the calculating apparatus. Accordingly, they can be stored in the storage apparatus and implemented by the calculating apparatus, and in some situation, the shown or described steps can be executed according to a sequence different from the sequence here, or they are made to various integrated circuit module respectively, or a plurality of modules or steps therein are made into the single integrated circuit module to be implemented. By this way, the present invention is not limit to any specific form of the combination of the hardware and software.

The above description is only the alternative embodiments of the present invention and is not intended to limit the present invention. For those skilled in the art, the present invention may have various modifications and variations. All of modifications, equivalents and/or variations without departing from the rule and essence of the present invention should be embodied in the scope of the appending claims of the present invention.

## Claims

1. A service providing method, comprising:
identifying a request currently initiated by a terminal as a request for using a directional application;
allocating a traffic quota for current use of the terminal according to a directional traffic card bound with a user identification of the terminal, wherein, the directional traffic card is used to pay for traffic generated when the terminal uses the directional application; and
transmitting the allocated traffic quota to a network side device corresponding to the directional application, and instructing the network side device to provide a service corresponding to the directional application for the terminal according to the traffic quota.

2. The method according to claim 1, wherein, when instructing the network side device to provide a service corresponding to the directional application for the terminal according to the traffic quota, the method further comprises:
instructing the network side device to guarantee a specified network bandwidth when the network side device provides the service for the terminal.

3. The method according to claim 1 or 2, wherein, after instructing the network side device, the method further comprises:
the network side device providing the service for the terminal according to an instruction, and separately measuring traffic generated by the terminal using the directional application this time.

4. The method according to claim 1 or 2, wherein, before identifying a request currently initiated by a terminal as a request for using a directional application, the method further comprises:
receiving an operation request, transmitted by the terminal, for requesting to bind the directional traffic card;
accepting the operation request, and binding the user identification of the terminal with the directional traffic card; and
synchronizing a binding relationship between the user identification and the directional traffic card to the network side device.

5. The method according to claim 4, wherein, before identifying a request currently initiated by a terminal as a request for using a directional application, the method further comprises:
receiving a request for card-making the directional traffic card, responding to the request, and recording information of the directional traffic card; and
receiving an operation request for confirming the directional traffic card, and synchronizing the information of the directional traffic card to the network side device.

6. The method according to claim 5, wherein, the information of the directional traffic card comprises: a capacity of the directional traffic card, and identification information of the directional application.

7. The method according to claim 6, wherein, the information of the directional traffic card further comprises: specified bandwidth information.

8. The method according to claim 1 or 2, wherein, the method further comprises:
receiving a request, transmitted by the network side device, for applying for the traffic quota, wherein, the request carries traffic already generated by the current terminal using the directional application;
deducting the generated traffic from remaining balance of the directional traffic card, and judging whether a remaining balance after a deduction is less than or equal to zero; and if not, then reallocating the traffic quota according to the remaining balance; and
transmitting the reallocated traffic quota to the network side device.

9. A service providing apparatus, comprising:
an identification module, arranged to identify a request currently initiated by a terminal as a request for using a directional application;
an allocation module, arranged to allocate a traffic quota for current use of the terminal according to a directional traffic card bound with a user identification of the terminal; and
a transmission module, arranged to transmit the allocated traffic quota to a network side device corresponding to the directional application, and instruct the network side device to provide a service corresponding to the directional application for the terminal according to the traffic quota.

10. The apparatus according to claim 9, wherein, the transmission module is further arranged to instruct the network side device to guarantee a specified network bandwidth when the network side device provides the service for the terminal.

11. The apparatus according to claim 9 or 10, wherein, the apparatus further comprises:
a binding module, arranged to receive an operation request, transmitted by the terminal, for requesting to bind the directional traffic card, and bind a user identification of the terminal with the directional traffic card; wherein, the directional traffic card is used to pay for traffic generated when the directional application is used; and
a synchronization module, arranged to synchronize a binding relationship between the user identification and the directional traffic card to the network side device.

12. The apparatus according to claim 11, wherein, the apparatus further comprises:
a recording module, arranged to, when receiving a request for card-making the directional traffic card, respond to the request, and record information of the directional traffic card; and
the synchronization module is further arranged to receive an operation request for confirming the directional traffic card, and synchronize the information of the directional traffic card to the network side device.

13. The apparatus according to claim 9 or 11, wherein,
the apparatus further comprises a receiving module, arranged to receive a request, transmitted by the network side device, for applying for the traffic quota, wherein, the request carries traffic already generated by the current terminal using the directional application; an execution module, arranged to deduct the generated traffic from remaining balance; a judgment module, arranged to judge whether a remaining balance after a deduction is less than or equal to zero; and the allocation module is further arranged to reallocate the traffic quota according to the remaining balance; and
the transmission module is further arranged to transmit the reallocated traffic quota to the network side device.

14. A service providing system, comprising: a network side device and the apparatus in any one of claims 9 to 13, wherein, the network side device is arranged to, according to an instruction of the apparatus, provide the service corresponding to the directional application for the terminal as per the traffic quota allocated by the apparatus for the terminal to use the directional application this time.

15. The system according to claim 14, wherein, the network side device is further arranged to guarantee a specified network bandwidth when providing the service for the terminal.

16. The system according to claim 14 or 15, wherein, the network side device is further arranged to separately measure traffic generated by the terminal using the directional application this time.
